# EUROPEAN PATENT SPECIFICATION

(11) **EP 0 802 229 B1**
(45) Date of publication and mention of the grant of the patent: **02.10.2002**
(21) Application number: 97106121.3
(22) Date of filing: 15.04.1997
(51) Int. Cl.: C08L 83/04, B01D 19/04

(54) **Dispersible silicone compositions**
Dispergierbare Siliconzusammensetzungen
Compositions de silicone dispersables

(30) Priority: 19.04.1996 US 635119
(43) Date of publication of application: 22.10.1997
(73) Proprietor: DOW CORNING CORPORATION, Midland Michigan 48686-0994 (US)
(72) Inventor: Fey, Kenneth Christopher, Midland, Michigan 48640 (US); Habermehl, James, Midland, Michigan 48640 (US)
(74) Representative: Fleischer, Holm Herbert, Dr.

(56) References cited:
- EP-A- 0 163 541
- EP-A- 0 705 632
- US-A- 4 032 473
- US-A- 4 639 489

## Description

This invention relates to dispersible silicone compositions. More particularly, this invention provides dispersible silicone compositions comprising a blend of a silicone composition and a polyisobutylene compound having two fully saturated end groups.

The use of various silicone containing compositions as antifoams or defoamers is known. In this regard, it is well established that this art is highly unpredictable and slight modification can greatly alter the performance of such compositions. Most of these compositions contain silicone fluid (usually dimethylpolysiloxane), often in combination with small amounts of silica filler. Additionally, these compositions may include various surfactants and dispersing agents to impart improved foam control or stable properties.

Useful silicone compositions as foam control agents have been taught in the prior art. For example, the following U.S. Patents are generally representative: 3,959,175; 4,639,489; 4,690,713; 4,749,740; 4,978,471; 4,983,316; 5,283,004; 5,442,010. Similar international patents are EP-A 0 217 501 and CA-A 2,110,523.

EP-A 705 637 discloses an antifoam composition comprising a polydimethylsiloxane and a polyisobutylene oligomer having a number average molecular weight of 200 to 2,300 and at least one end terminated with a 2-methylpropenyl group.

US-A 403,247,3 refers to a water-based defoamer composition in a form of an aqueous emulsion containing as the disperse phase a water insoluble liquid hydrocarbon, a normally solid fatty acid diamide, hydrophobic silica particles and a non-ionic emulsifier having an HLB of about 8-12.

It has now been surprisingly found that polyisobutylene fluids having two fully saturated end groups are effective dispersing agents for silicone compositions.

It is the object of the present invention to provide silicone foam control compositions that are stable and easily dispersible.

The present invention relates to a dispersible silicone composition comprising a blend of (I) a silicone composition obtainable by reacting at a temperature of 50 to 300°C. a mixture comprising: (i) 100 parts by weight of at least one polyorganosiloxane selected from (A) a polyorganosiloxane having a viscosity of 20 to 100,000 mm²/s at 25°C. and expressed by the general formula R¹ₐSiO_{(4-a)/2}, in which R¹ is a monovalent hydrocarbon or halogenated hydrocarbon group having 1 to 10 carbon atoms and a has an average value of 1.9 to 2.2; (B) a polyorganosiloxane having a viscosity of 200 to 100 million mm²/s at 25°C. expressed by the general formula R²_{b}(R³O)_{c}SiO_{(4-b-c)/2} in which R² is a monovalent hydrocarbon or halogenated hydrocarbon group having 1 to 10 carbon atoms, R³ is hydrogen atom or a monovalent hydrocarbon group having 1 to 10 carbon atoms, b has an average value of 1.9 to 2.2 and c has a sufficient value to give at least one -OR³ group in each molecule, at least one such -OR³ group being present at the end of the molecular chain; or (C) a mixture of (A) and (B); (ii) 0.5 to 20 parts by weight of at least one silicon compound selected from (a) an organosilicon compound of the general formula R⁴_{d}SiX_{4-d} in which R⁴ is a monovalent hydrocarbon group having 1 to 5 carbon atoms, X is selected from halogen atom or a hydrolyzable group and d has an average value of one or less, (b) a partially hydrolyzed condensate of compound (a), (c) a siloxane resin comprising (CH₃)₃SiO_{1/2} units and SiO_{4/2} units wherein the ratio of (CH₃)₃SiO_{1/2} units to SiO_{4/2} units is 0.4:1 to 1.2:1 or (d) a condensate of compound (c) and compound (a) or (b); and (iii) a catalytic amount of a catalyst for promoting reaction of the other components; and (II) a polyisobutylene compound having two fully saturated end groups.

The compositions of this invention expediently comprise silicone composition (I) and polyisobutylene compound (II). Component (I) is prepared by reacting (i) a polyorganosiloxane, (ii) a silicon compound and (iii) a catalytic amount of a compound for promoting reaction of the other components.

Component (i) may be selected from (A) polyorganosiloxanes comprising siloxane units of the general formula R¹ₐSiO_{(4-a)/2} and having a viscosity of 20 to 100,000 mm²/s (centistokes) at 25°C. The organo groups R¹ of the polyorganosiloxane (A) are the same or different monovalent hydrocarbon or halogenated hydrocarbon groups having one to ten carbon atoms. Specific examples thereof are well known in the art and include methyl, ethyl, propyl, butyl, octyl, trifluoropropyl, phenyl, 2-phenylethyl and vinyl groups. The methyl group is particularly preferred. In this formula, a has a value of 1.9 to 2.2. It is particularly preferred that polyorganosiloxane (A) is a trimethylsilyl-terminated polydimethylsiloxane having a viscosity of about 350 to 15,000 mm²/s at 25°C.

Alternatively, component (i) may be selected from (B) polyorganosiloxanes comprising siloxane units of the general formula R²_{b}(R³O)_{c}SiO_{(4-b-c)/2} and having a viscosity of 200 to 100 million mm²/s at 25°C. wherein R² is independently selected from the monovalent hydrocarbon or halogenated hydrocarbon groups designated for group R¹; R³ is a hydrogen atom or R² and the -OR³ group is present at least at one of the molecular chain ends of the polyorganosiloxane. The value of b is between 1.9 to 2.2 and c has a value to provide at least one -OR³ group per molecule. It is particularly preferred that polyorganosiloxane (B) is a hydroxyl-terminated polydimethylsiloxane having a viscosity of 1,000 to 50,000 mm²/s at 25°C. Component (i) may also be (C) a mixture of (A) and (B) in any proportion.

Component (ii) is at least one silicon compound selected from (a) to (d). (a) is an organosilicon compound of the general formula R⁴_{d}SiX_{4-d} wherein R⁴ is a monovalent hydrocarbon group having one to five carbon atoms, X is a halogen atom or a hydrolyzable group such as -OR⁵ or -OR⁶OR⁷, in which R⁶ is a divalent hydrocarbon group having one to five carbon atoms and R⁵ and R⁷ are each a hydrogen atom or a monovalent hydrocarbon group having one to five carbon atoms, with the average value of d not exceeding 1. (b) is a partially hydrolyzed condensate of the compound (a). (c) is a siloxane resin comprising (CH₃)₃SiO_{1/2} and SiO₂ units and having a (CH₃)₃SiO_{1/2}/SiO₂ ratio of 0.4/1 to 1.2/1. (d) is a condensate of the siloxane resin (c) with the compound (a) or (b). It is preferred that component (ii) is selected from either an alkyl polysilicate, wherein the alkyl group has one to five carbon atoms, such as methyl polysilicate, ethyl polysilicate and propyl polysilicate or the siloxane resin (c). Most preferably, component (ii) is either ethyl polysilicate or a siloxane resin copolymer comprising (CH₃)₃SiO_{1/2} units and SiO₂ units in a molar ratio of approximately 0.4:1 to 1.2:1.

Component (iii) is a compound used as a catalyst for promoting the reaction of the other components. Any compound which promotes condensation reactions or rearrangement/condensation reactions is suitable as our component (iii). It is selected from siloxane equilibration catalysts, silanol-condensing catalysts or a combination thereof. Catalysts suitable as component (iii) are exemplified by alkali metal hydroxides such as potassium hydroxide, sodium hydroxide or cesium hydroxide; alkali metal silanolates such as potassium silanolate; alkali metal alkoxides such as potassium isopropoxide or potassium ethoxide; quaternary ammonium hydroxides such as beta-hydroxyethyltrimethyl ammonium hydroxide, benzyltrimethyl ammonium hydroxide and tetramethyl ammonium hydroxide, quaternary ammonium silanolates; quaternary phosphonium hydroxides such as tetrabutyl phosphonium hydroxide or tetraethylphosphonium hydroxide; quaternary phosphonium silanolates; metal salts of organic acids such as dibutyltin dilaurate, stannous acetate, stannous octanoate, lead napthenate, zinc octanoate, iron 2-ethylhexoate and cobalt naphthenate; mineral acids such as sulfuric or hydrochloric acid; organic acids such as acetic acid or organosulfonic acids; and ammonium compounds such as ammonium carbonate or ammonium hydroxide. It is preferred that the catalyst is selected from potassium silanolate, potassium hydroxide or sodium hydroxide.

The composition further comprises up to 30 parts by weight of component (III) a filler. This filler is exemplified by fumed, precipitated or plasmatic TiO₂, Al₂O₃, Al₂O₃/SiO₂, ZrO₂/SiO₂ and SiO₂. Specific examples of this filler include zirconium silica hydrogels (co-precipitated zirconium and silica) or hydrophobic precipitated silica, the latter being highly preferred. The filler can be either hydrophilic or hydrophobic. It is hydrophobed during manufacture (i.e. in-situ) or independently. Various grades of silica having a particle size of several millimicrons to several microns and a specific surface area of 50 to 300 m²/g are commercially available and suitable for use.

The mixture of (I) further comprises up to 20 parts by weight of component (iv), a polyorganosiloxane comprising siloxane units of the general formula R⁸ₑ(R⁹O)_{f}SiO_{(4-e-f)/2} and having a viscosity of 10 to 100 mm²/s at 25°C. wherein R⁸ is a monovalent hydrocarbon or halogenated hydrocarbon group having one to ten carbon atoms and R⁹ is hydrogen atom or a monovalent hydrocarbon group having one to ten carbon atoms. The value of e is between 1.9 and 2.2 and f has a value to provide two or more -OR⁹ groups in each molecule. It is preferred that component (iv) is added when filler (III) is a hydrophilic silica.

A mixture of components (i), (ii) and (iii), optionally containing components (III) and/or (iv), is reacted under heat to produce the silicone composition (I), the proportions of the various components being: Component (i) - 100 parts by weight; Component (ii) - 0.5 to 20, preferably 1 to 7, parts by weight; Component (iii) - A catalytic amount (usually in the range of 0.03 to 1 part by weight); Component (III), if present, - from greater than 0 to 30, preferably 1 to 15 and highly preferred is 5 to 15 parts by weight; Component (iv), if present, - from greater than 0 to 20, preferably 1 to 10, parts by weight.

The proportions of components (A) and (B) used depends largely on their respective viscosities. It is preferable to use a mixture of (A) and (B) which has a viscosity of 1,000 to 100,000 mm²/s at 25°C.

The silicone composition (I) is prepared by first mixing components (i), (ii) and (iii) and heating this blend to 110 to 120°C. Filler (III), if desired, is then uniformly added using an appropriate dispersing device, such as a homomixer, colloid mill or triple roll mill. The resulting mixture is heated at a temperature of 50 to 300°C., preferably 100 to 300°C. and reacted for one to eight hours, although the reaction time varies depending on the temperature. If component (iv) is employed in the composition, it is generally added after the filler (III). It is preferable to carry out all mixing and heating operations in an inert gas atmosphere to avoid any danger and to remove volatile matter (unreacted matter, by-products and the like). The mixing order of components, the heating temperature and residence time are not believed critical and can be changed as required. It is further preferred that, after reaction, the catalyst is neutralized to further stabilize silicone composition (I).

Alternatively, silicone composition (I) comprises a diorganopolysiloxane, a silicon compound with a catalyst for promoting the reaction of these components, this combination optionally containing a filler such as silica. These systems contain a mixture of a trimethylsilyl-terminated polydimethylsiloxane and a diorganopolysiloxane having silicon-bonded hydroxyl groups or silicon-bonded alkoxy groups along its main chain or at its chain ends, said alkoxy groups having from 1 to 6 carbon atoms. The silicon compound (ii) acts as a crosslinker for the diorganopolysiloxane by reacting functionalities on said components. It is further preferred that said diorganopolysiloxane is either a linear or a branched polymer or copolymer of siloxane units selected from dimethylsiloxane units, methylphenylsiloxane units or methyltrifluoropropylsiloxane units. Most preferably, the diorganopolysiloxane of component (A) is a polydimethylsiloxane containing Si-bonded hydroxyl or methoxy functionality. Our silicon compound (ii) is preferably a siloxane resin comprising (CH₃)₃SiO_{1/2} and SiO₂ units and having a molar ratio of (CH₃)₃SiO_{1/2} to SiO₂ between 0.4:1 and 1.2:1. The latter resin is prepared according to U.S. Patent 2,676,182 and typically contains from 0.5 to 3 weight percent of hydroxyl groups.

A highly preferred component (I) is a homogeneous blend of a hydroxyl-terminated polydimethylsiloxane, a trimethylsilyl-terminated polydimethylsiloxane having a viscosity in the range of 1,000 to 50,000 mm²/s at 25°C., an alkyl polysilicate wherein the alkyl group has one to five carbon atoms, such as methyl polysilicate, ethyl polysilicate and propyl polysilicate and a potassium silanolate catalyst reacted at a temperature of 50 to 300°C.

Component (II) is a polyisobutylene compound. The compound may be a polyisobutylene polymer or a polyisobutylene oligomer. Such oligomers or polymers are known in the art and many are available commercially in a variety of molecular weights and endgroup combinations. Component (II) is preferably a polyisobutylene compound having a number average molecular weight (Mₙ) of 150 to 6,000, preferably 200 to 3,000, more preferably 200 to 2,500 and most preferably 200 to 400. The polyisobutylene compound has fully saturated end groups. Our polyisobutylene compound preferably has fully saturated endgroups, where the endgroup is an alkyl group.

The above mentioned polyisobutylenes are available commercially in a variety of molecular weights from the Amoco Chemical Company (Chicago, IL) under the trade name Indopol™ or from the Polyesther Corporation (Southhampton, NY) under the trade name Polysynlane™.

For the present invention, the weight ratio of component (I) to component (II) generally ranges from 99:1 to 1:99. Preferably, the ratio ranges from 90:10 to 10:90 and it is more preferred that the range be from 70:30 to 30:70.

The dispersible silicone compositions of this invention may further comprise component (IV) a polyorganosiloxane of the type described for component (i). Preferred polyorganosiloxanes are selected from the same trimethylsilyl-terminated polydimethylsiloxanes described for the preferred embodiments for (A) and the hydroxyl-terminated polydimethylsiloxanes for (B) of component (i). For Component (IV), the preferred viscosity ranges of the polyorganosiloxanes of (A) and (B) are 2 to 100 mm²/s and 5 to 100,000 mm²/s, respectively. Particularly preferred viscosity ranges for these components are 10 to 50 mm²/s for (A) and 10 to 100 mm²/s for (B), the above viscosities being measured at 25°C. The amount of component (IV) added generally ranges from 10 to 100 parts by weight, said parts by weight being based on the total weight of the composition.

The dispersible silicone compositions of the present invention may further comprise component (V) mineral oil. The term "mineral oil" refers to hydrocarbon oils derived from carbonaceous sources, such as petroleum, shale and coal or equivalents thereof. The mineral oil of component (V) is any type of mineral oil, many of which are commercially available, including heavy white mineral oil that is high in paraffin content, light white mineral oil, petroleum oils such as aliphatic or wax-base oils, aromatic or asphalt-base oils, mixed base oils, petroleum derived oils such as lubricants, engine oils, machine oils or cutting oils and medicinal oils such as refined paraffin oil.

The above mentioned mineral oils are available commercially at a variety of viscosities from Amoco Chemical Company (Chicago, ILL.) under the tradename Amoco™ White Mineral Oil, from Exxon Company (Houston, Texas) under the tradenames Bayol™, Marcol™ or Primol™ or from Lyondell Petrochemical Company (Houston, Texas) under the trade name Duoprime^{R} Oil. Preferably, the mineral oil has a viscosity of from 10 to 50 millipascal-seconds (mPa·s) at 40°C. The amount of mineral oil (V) depends on the types of components (I) and (II) employed. However, 500 to 1000 parts by weight of mineral oil is typically employed, said parts by weight being based on the total weight of the composition.

When mineral oil is present in our compositions, these compositions will also comprise component (VI), a saturated or unsaturated bisamide, such as those disclosed in U.S. Patent 4,107,073. Preferred bisamides are those having the formula RC(O)N(H)-(CH₂)ₙ-N(H)C(O)R where n is an integer from 1 to 6 and R is a saturated or unsaturated, straight or branched chain hydrocarbyl group having from 5 to 22 carbon atoms. Particularly preferred is ethylene bis-stearamide. The amount of bisamide (VI) used in the compositions is generally 0.01 to 5 parts by weight; and preferably is 0.01 to 2 parts by weight, based on 100 parts by weight of mineral oil.

In addition to the above components, the dispersible silicone compositions of the present invention may also contain adjuvants such as corrosion inhibitors and dyes. Our compositions are typically prepared by blending components (I) and (II), and any optional components, to form a homogenous mixture. This is accomplished by any convenient mixing method known in the art such as a spatula, mechanical stirrers, in-line mixing systems containing baffles, blades or any of the like mixing surfaces, including powered in-line mixers or homogenizers, a drum roller, a three-roll mill, a sigma blade mixer, a bread dough mixer or a two roll mill. Although the mixing order is not considered critical, it is preferred to first mix components (I) and (II) and to then disperse the filler (III) into this combination by using a high shear mixer and then optionally adding polyorganosiloxane (IV). It is also preferred that components (I) and (II), and optionally (III) and/or (IV) be first blended together and that this mixture is preferably added to the mineral oil (V) or is added to a mixture of both mineral oil (V) and bisamide (VI).

The present invention also relates to a process for controlling foam in a foaming system wherein the claimed dispersible silicone compositions are simply added to a foaming or foam-producing system, in an amount sufficient to reduce foaming, as determined by routine experimentation. Usually, our compositions are added at a concentration of 0.001 to 0.1 part by weight based on the weight of the foaming system. However, the skilled artisan will readily determine optimum concentrations after a few routine experiments. The method of addition is not critical and the composition is metered or added by any of the techniques known in the art.

Examples of foaming systems contemplated herein include media encountered in the production of phosphoric acid; sulphite or sulphate process pulping operations; bauxite digestion solutions in the production of aluminum; metal working fluids; paper manufacture; detergent systems and hydrocarbon fluid based systems. The claimed compositions are conventionally used as any kind of foam control composition, i.e. as defoaming compositions and/or antifoaming compositions. Defoaming compositions are generally considered as foam reducers whereas antifoaming compositions are generally considered as foam preventors. Thus, our compositions find utility as foam control compositions in various media such as inks, coatings, paints, detergents, pulp and paper manufacture, textile dyes and hydrocarbon oil containing fluids.

All parts and percentages in the examples are on a weight basis unless indicated to the contrary. PIB as used herein denotes polyisobutylene. All viscosities were measured by a Brookfield Viscometer at 25°C and all given viscosity data refere to 25°C unless otherwise indicated. The number average molecular weight of the compounds was measured by gel permeation chromatography. The following materials were employed in the preparation of these dispersible silicone compositions:

Silicone Composition A was prepared according to Example 1 of U.S. Patent 4,639,489. This composition contained 60 parts of a trimethylsilyl-terminated polydimethylsiloxane having a viscosity of 1,000 mm²/s at 25°C.; 29 parts of a hydroxyl-terminated polydimethylsiloxane having a viscosity of 12,500 mm²/s at 25°C.; 2.9 parts of ethyl polysilicate (Silicate 45™ of Tama Kagaku Kogyo Co., Ltd., Japan); 4.8 parts of a potassium silanolate catalyst; 2.9 parts of Aerogel™ #200 silica (Nippon Aerogel Co., Japan) having a surface area of 200 m²/g; and 4.8 parts of hydroxyl-terminated polydimethylsiloxane having a viscosity of 40 mm²/s at 25°C. In addition to the above ingredients, this formulation also included 0.3 part of ethanol as part of the catalyst, 0.1 part of water adsorbed on the silica and 0.1 part of L-540™, added as a process dispersant. L-540™ (Union Carbide Corp., Danbury, CT) is described as a silicone polyether block copolymer wherein the polyether blocks consist of 50/50 mole percent of polyoxyethylene/polyoxypropylene.

PIB A = Polysynlane™, described as a saturated polyisobutylene having a number average molecular weight of 380 and having one terminal group of the formula 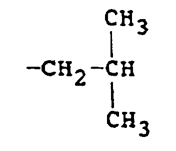 the other terminal group being of the formula -C(CH₃)₃. It is a product of Polyesther Corporation, Southhampton, NY.

PIB B = Indopol™ L-14, described as a vinyl-terminated polyisobutylene having a number average molecular weight of 370, a product of the Amoco Chemical Company, Chicago, IL. One terminal group of this oligomer has the vinyl-like structure (2-methylpropenyl) -HC=C(CH₃)₂, the other terminal group has the formula -C(CH₃)₃.

PIB C = Indopol™ L-50, similar to PIB B, but having a number average molecular weight of 455.

PIB D = Indopol™ L-100, similar to PIB B, but having a number average molecular weight of 510.

PIB E = Indopol™ H-40, similar to PIB B, but having a number average molecular weight of 750.

PIB F = Indopol™ L-65, similar to PIB B, but having a number average molecular weight of 435.

Mineral Oil A is a heavy paraffinic mineral oil having a viscosity of 177 mPa·s at 25°C. from Fisher Scientific Company (Pittsburgh, Pa.).

Mineral Oil B is a mineral oil having a viscosity of 10-40 mPa·s at 40°C.

### Comp. Example 1

Silicone Composition A and PIB B-E were mixed at various weight ratios until a uniform consistency was achieved. After 24 hours at 25°C, the samples were inspected to determine if they were still uniform, stable mixtures. The results are shown in Table 1.

**TABLE 1**

| Weight Ratio of Silicone composition A to PIB | | | | | |
|---|---|---|---|---|---|
| SAMPLE | PIB TYPE | 70/30 | 60/40 | 50/50 | 40/60 |
| 1 | B | Stable | Stable | Stable | Stable |
| 2 | C | 2 Phases | 2 Phases | 2 Phases | 2 Phases |
| 3 | D | 2 Phases | 2 Phases | 2 Phases | 2 Phases |
| 4 | E | 2 Phases | 2 Phases | 2 Phases | 2 Phases |

The mixtures of Sample 1 at the various weight ratios of Table 1, were then placed in a 40°C. oven and monitored six weeks for any sign of separation. No separation of phases or change in appearance was noted in any samples.

### EXAMPLE 1

Silicone Composition A and PIB A were mixed at various weight ratios. These mixtures were evaluated after 24 hours at 25°C. Table 2 indicates that all of the mixtures remained as one phase and homogeneous.

**TABLE 2**

| Weight Ratio of Silicone composition A to PIB | | | | | |
|---|---|---|---|---|---|
| SAMPLE | PIB TYPE | 70/30 | 60/40 | 50/50 | 40/60 |
| 5 | A | Stable | Stable | Stable | Stable |

The mixtures of sample 5 were then placed in a 40°C. oven and monitored for six weeks. No significant change in appearance was noted and no phase separation occurred.

### EXAMPLE 2

A silicone composition prepared by reacting 88 parts of a polydimethylsiloxane (viscosity of 1000 mm²/s), 10 parts of silica, 3 parts of a siloxane resin comprising (CH₃)₃SiO_{1/2} units and SiO_{4/2} units wherein the ratio of (CH₃)₃SiO_{1/2} units to SiO_{4/2} units was 0.75:1 and a NaOH catalyst. This composition was then mixed with PIB A. The weight ratios of silicone composition to PIB were 90/10, 80/20, 60/40, 50/50 and 30/70, respectively. After 24 hours, none of the silicone compositions blended with PIB A had separated.

### Comp. EXAMPLE 2

A polydimethylsiloxane fluid (viscosity of 1000 mm²/s), was mixed with PIB B at the following weight part ratios: 30/70, 40/60, 50/50, 60/40 and 70/30. After setting for 24 hours at 25°C., all the blends had separated into two phases.

### Comp. EXAMPLE 3

A polydimethylsiloxane fluid (viscosity of 1000 mm²/s) was mixed with PIB A at the following weight part ratios: 30/70, 40/60, 50/50, 60/40 and 70/30. After setting for 24 hours at 25°C, all the blends appeared clear. But, upon inversion of the samples a refraction pattern was noted that indicated an incomplete dispersion.

### Comp. Example 4

Silicone Composition A and PIB F were mixed at weight part ratios of 70/30, 60/40, 50/50 and 40/60, respectively. These were evaluated after 48 hours at 25°C. All of the samples showed some degree of phase separation, with the rate of separation increasing as the PIB content increased.

### Comp. EXAMPLE 5

Silicone Composition A was blended with a polydimethylsiloxane (viscosity of 1000 mm²/s at 25°C.), with a hydroxy end-blocked polydimethylsiloxane fluid having a viscosity of 70 mm²/s at 25°C., at a weight ratio of 1.2:1.2:1.0, respectively. This mixture was then blended with PIB B. A second blend was made using the silicone mixture described above and PIB C. Both were allowed to settle for 48 hours at room temperature and their appearance was evaluated. The first blend remained a one phase material with no significant separation of the components. The second blend had separated into two distinct phases in roughly the same volume proportions as the original amounts of silicone and PIB that were mixed.

## Claims

1. A dispersible silicone composition comprising a blend of
(I) a silicone composition obtainable by reacting at a temperature of 50 to 300°C a mixture comprising:
(i) 100 parts by weight of at least one polyorganosiloxane selected from
(A) a polyorganosiloxane having a viscosity of 20 to 100,000 mm²/s at 25°C and expressed by the general formula R¹ₐSiO_{(4-a)/2} in which R¹ is a monovalent hydrocarbon or halogenated hydrocarbon group having 1 to 10 carbon atoms and a has an average value of 1.9 to 2.2,
(B) a polyorganosiloxane having a viscosity of 200 to 100 million mm²/s at 25°C expressed by the general formula R²_{b}(R³O)_{c}SiO_{(4-b-c)/2} in which R² is a monovalent hydrocarbon or halogenated hydrocarbon group having 1 to 10 carbon atoms, R³ is hydrogen atom or a monovalent hydrocarbon group having 1 to 10 carbon atoms, b has an average value of 1.9 to 2.2 and c has a sufficient value to give at least one -OR³ group in each molecule, at least one such -OR³ group being present at the end of the molecular chain or
(C) a mixture of (A) and (B);
(ii) 0.5 to 20 parts by weight of at least one silicon compound selected from
(a) an organosilicon compound of the general formula R⁴_{d}SiX_{4-d} in which R⁴ is a monovalent hydrocarbon group having 1 to 5 carbon atoms, X is selected from halogen atom or a hydrolyzable group and d has an average value of one or less,
(b) a partially hydrolyzed condensate of said compound (a),
(c) a siloxane resin comprising (CH₃)₃SiO_{1/2} units and SiO_{4/2} units wherein the molar ratio of (CH₃)₃SiO_{1/2} units to SiO_{4/2} units is 0.4:1 to 1.2:1 or
(d) a condensate of compound (c) with compound (a) or (b); and
(iii) a catalytic amount of a catalyst promoting the reaction of the other components;
(II) a polyisobutylene compound having two fully saturated end groups.

2. A composition according to claim 1 wherein the composition further comprises (III) a filler.

3. A composition according to any of claim 1 and 2 wherein the polyorganosiloxane (A) is a trimethylsiloxy-terminated polydimethylsiloxane having a viscosity of 350 to 15,000 mm²/s at 25°C.

4. A composition according to any of claim 1 and 2 wherein polyorganosiloxane (B) is a hydroxyl-terminated polydimethylsiloxane having a viscosity of 1,000 to 50,000 mm²/s at 25°C.

5. A composition according to any of claims 1-4 wherein silicon compound (ii) is selected from ethyl polysilicate or a siloxane resin copolymer comprising (CH₃)₃SiO_{1/2} units and SiO₂ units in a molar ratio of approximately 0.4:1 to 1.2:1. respectively.

6. A composition according to any of claims 1-5 wherein the catalyst (iii) is selected from alkali metal hydroxides, alkali metal silanolates, alkali metal alkoxides, quaternary ammonium hydroxides, quaternary ammonium silanolates, quaternary phosphonium hydroxides, quaternary phosphonium silanolates, ammonium carbonate or metal salts of organic acids.

7. A composition according to any of claims 2-5 wherein the filler is a hydrophobic silica having a surface area of 50 to 300 m²/g in an amount of up to 30 parts by weight.

8. A composition according to any of claims 1-7 wherein the mixture of (I) further comprises up to 20 parts by weight of: (iv) a polyorganosiloxane having a viscosity of 10 to 100 mm²/s at 25°C and being expressed by the general formula R⁶ₑ(R⁹O)_{f}SiO_{(4-e-f)/2} in which R⁶ is a monovalent hydrocarbon group having 1 to 10 carbon atoms, R⁹ is hydrogen atom or a monovalent hydrocarbon group having 1 to 10 carbon atoms, e is from 1.9 to 2.2 and f has a sufficient value to give at least two -OR⁹ groups in each molecule at the end of the molecular chain.

9. A composition according to claim 8 wherein said polyorganosiloxane (iv) is a hydroxyl-terminated polydimethylsiloxane having a viscosity of 10 to 100 mm²/s at 25°C.

10. A composition according to any of claims 1-9 wherein said polyisobutylene has a number average molecular weight of 200 to 400.

11. A composition according to claim 1 wherein the saturated end group is independently selected from -C(CH₃)₃ or -CH₂C(CH₃)₂H.

12. A composition according to any of claims 1-11 wherein the composition further comprises at least one component selected from (V) mineral oil or a mixture of (V) mineral oil and (VI) a saturated or unsaturated bisamide.

13. A method for controlling foam in a foam producing system comprising adding to said system the composition of any of claims 1-12.

## Patentansprüche

1. Dispergierbare Siliconzusammensetzung, enthaltend eine Mischung von
(I) einer Siliconzusammensetzung, erhältlich durch Umsetzen bei einer Temperatur von 50 bis 300°C einer Mischung, enthaltend:
(i) 100 Gewichtsteile wenigstens eines Polyorganosiloxans, ausgewählt aus
(A) einem Polyorganosiloxan mit einer Viskosität von 20 bis 100.000 mm²/s bei 25°C und ausgedrückt durch die allgemeine Formel R¹ₐSiO_{(4-a)/2}, in der R¹ eine monovalente Kohlenwasserstoff- oder halogenierte Kohlenwasserstoffgruppe mit 1 bis 10 Kohlenstoffatomen ist und a einen Mittelwert von 1,9 bis 2,2 aufweist,
(B) einem Polyorganosiloxan mit einer Viskosität von 200 bis 100 Millionen mm²/s bei 25°C und ausgedrückt durch die allgemeine Formel R²_{b}(R³O)_{c}SiO_{(4-b-c)/2}, in der R² eine monovalente Kohlenwasserstoff- oder halogenierte Kohlenwasserstoffgruppe mit 1 bis 10 Kohlenstoffatomen ist, R³ ein Wasserstoffatom oder eine monovalente Kohlenwasserstoffgruppe mit 1 bis 10 Kohlenstoffatomen ist, b einen Mittelwert von 1,9 bis 2,2 aufweist und c einen ausreichenden Wert hat, um wenigstens eine -OR³-Gruppe in jedem Molekül zu ergeben, wobei wenigstens eine dieser -OR³-Gruppen am Ende der Molekülkette vorhanden ist, oder
(C) einer Mischung von (A) und (B);
(ii) 0,5 bis 20 Gewichtsteile wenigstens einer Siliciumverbindung, ausgewählt aus
(a) einer Organosiliciumverbindung der allgemeinen Formel R⁴_{d}SiX_{4-d}, in der R⁴ eine monovalente Kohlenwasserstoffgruppe mit 1 bis 5 Kohlenstoffatomen ist, X ausgewählt ist aus einem Halogenatom oder einer hydrolysierbaren Gruppe und d einen Mittelwert von eins oder weniger aufweist,
(b) einem partiell hydrolysierten Kondensat dieser Verbindung (a),
(c) einem Siloxanharz, enthaltend (CH₃)₃SiO_{1/2}-Einheiten und SiO_{4/2}-Einheiten, wobei das molare Verhältnis von (CH₃)₃SiO_{1/2}-Einheiten zu SiO_{4/2}-Einheiten 0,4:1 bis 1,2:1 beträgt, oder
(d) einem Kondensat der Verbindung (c) mit Verbindung (a) oder (b), und
(iii) eine katalytische Menge eines Katalysators, der die Reaktion der anderen Komponenten unterstützt,
(II) einer Polyisobutylenverbindung mit zwei vollständig gesättigten Endgruppen.

2. Zusammensetzung nach Anspruch 1, wobei die Zusammensetzung zusätzlich (III) einen Füllstoff enthält.

3. Zusammensetzung nach einem der Ansprüche 1 und 2, worin das Polyorganosiloxan (A) ein Polydimethylsiloxan mit endständigen Trimethylsiloxygruppen und einer Viskosität von 350 bis 15.000 mm²/s bei 25°C ist.

4. Zusammensetzung nach einem der Ansprüche 1 und 2, worin das Polyorganosiloxan (B) ein Polydimethylsiloxan mit endständigen Hydroxylgruppen und einer Viskosität von 1.000 bis 50.000 mm²/s bei 25°C ist.

5. Zusammensetzung nach einem der Ansprüche 1-4, worin die Siliciumverbindung (ii) ausgewählt ist aus Ethylpolysilicat oder einem Siloxanharzcopolymer, das (CH₃)₃SiO_{1/2}-Einheiten und SiO₂-Einheiten in einem molaren Verhältnis von ungefähr 0,4:1 bis 1,2:1 enthält.

6. Zusammensetzung nach einem der Ansprüche 1-5, worin der Katalysator (iii) ausgewählt ist aus Alkalimetallhydroxiden, Alkalimetallsilanolaten, Alkalimetallalkoxiden, quartären Ammoniumhydroxiden, quartären Ammoniumsilanolaten, quartären Phosphoniumhydroxiden, quartären Phosphoniumsilanolaten, Ammoniumcarbonat oder Metallsalzen organischer Säuren.

7. Zusammensetzung nach einem der Ansprüche 2-5, worin der Füllstoff ein hydrophobiertes Siliciumdioxid mit einer Oberfläche von 50 bis 300 m²/g in einer Menge von bis zu 30 Gewichtsteilen ist.

8. Zusammensetzung nach einem der Ansprüche 1-7, worin die Mischung von (I) zusätzlich bis zu 20 Gewichtsteile enthält von: (iv) einem Polyorganosiloxan mit einer Viskosität von 10 bis 100 mm²/s bei 25°C und ausgedrückt durch die allgemeine Formel R⁶ₑ(R⁹O)_{f}SiO_{(4-e-f)/2}, in der R⁶ eine monovalente Kohlenwasserstoffgruppe mit 1 bis 10 Kohlenstoffatomen ist, R⁹ ein Wasserstoffatom oder eine monovalente Kohlenwasserstoffgruppe mit 1 bis 10 Kohlenstoffatomen ist, e 1,9 bis 2,2 beträgt und f einen ausreichenden Wert aufweist, um wenigstens zwei -OR⁹-Gruppen in jedem Molekül am Ende der Molekülkette zu ergeben.

9. Zusammensetzung nach Anspruch 8, worin dieses Polyorganosiloxan (iv) ein Polydimethylsiloxan mit endständigen Hydroxylgruppen und einer Viskosität von 10 bis 100 mm²/s bei 25°C ist.

10. Zusammensetzung nach einem der Ansprüche 1-9, worin dieses Polyisobutylen ein zahlenmittleres Molekulargewicht von 200 bis 400 aufweist.

11. Zusammensetzung nach Anspruch 1, worin die gesättigte Endgruppe unabhängig voneinander ausgewählt ist aus -C(CH₃)₃ oder -CH₂C(CH₃)₂H.

12. Zusammensetzung nach einem der Ansprüche 1-11, worin die Zusammensetzung zusätzlich wenigstens eine Komponente enthält, ausgewählt aus (V) einem Mineralöl oder einer Mischung eines (V) Mineralöls und (VI) eines gesättigten oder ungesättigten Bisamids.

13. Verfahren zur Regulierung des Schaums in einem Schaum produzierenden System, umfassend Zugeben der Zusammensetzung nach einem der Ansprüche 1-12 zu diesem System.

## Revendications

1. Composition de silicone dispersible comprenant un mélange de
(I) une composition de silicone qu'on peut obtenir en faisant réagir à une température comprise entre 50 et 300°C un mélange comprenant :
(i) 100 parties en poids d'au moins un polyorganosiloxane choisi entre
(A) un polyorganosiloxane ayant une viscosité comprise entre 20 et 100 000 mm²/s à 25°C et représenté par la formule générale R¹ₐSiO_{(4-a)/2} dans laquelle R¹ est un groupe hydrocarboné monovalent ou un groupe hydrocarboné halogéné ayant 1 à 10 atomes de carbone et a a une valeur moyenne comprise entre 1,9 et 2,2,
(B) un polyorganosiloxane ayant une viscosité comprise entre 200 et 100 millions mm²/s à 25°C représenté par la formule générale R²_{b}(R³O)_{c}SiO_{(4-b-c)/2} dans laquelle R² est un groupe hydrocarboné monovalent ou un groupe hydrocarboné halogéné ayant 1 à 10 atomes de carbone, R³ est un atome d'hydrogène ou un groupe hydrocarboné monovalent ayant 1 à 10 atomes de carbone, b a une valeur moyenne comprise entre 1,9 et 2,2 et c a une valeur suffisante pour donner au moins un groupe -OR³ dans chaque molécule, au moins un de ces groupes -OR³ étant présent à la fin de la chaîne moléculaire ou
(C) un mélange de (A) et de (B) ;
(ii) 0,5 à 20 parties en poids d'au moins un composé du silicium choisi entre
(a) un composé d'organosilicium de formule générale R⁴_{d}SiX_{4-d} dans laquelle R⁴ est un groupe hydrocarboné monovalent ayant 1 à 5 atomes de carbone, X est choisi entre un atome d'halogène ou un groupe hydrolysable et d a une valeur moyenne inférieure ou égale à un,
(b) un produit de condensation partiellement hydrolysé dudit composé (a),
(c) une résine de siloxane comprenant des unités (CH₃)₃SiO_{1/2} et des unités SiO_{4/2} dans laquelle le ratio molaire des unités (CH₃)₃SiO_{1/2} sur les unités SiO_{4/2} est compris entre 0,4:1 et 1,2:1 ou
(d) un produit de condensation du composé (c) avec le composé (a) ou (b) ; et
(iii) une quantité catalytique d'un catalyseur favorisant la réaction des autres composants ;
(II) un composé de polyisobutylène ayant deux groupes terminaux complètement saturés.

2. Composition selon la revendication 1 dans laquelle la composition comprend en plus (III) une charge.

3. Composition selon l'une quelconque des revendications 1 et 2 dans laquelle le polyorganosiloxane (A) est un polydiméthylsiloxane terminé par des triméthylsiloxys ayant une viscosité comprise entre 350 et 15 000 mm²/s à 25°C.

4. Composition selon l'une quelconque des revendications 1 et 2 dans laquelle le polyorganosiloxane (B) est un polydiméthylsiloxane terminé par des hydroxyles ayant une viscosité comprise entre 1 000 et 50 000 mm²/s à 25°C.

5. Composition selon l'une quelconque des revendications 1-4 dans laquelle le composé du silicium (ii) est choisi entre du polysilicate d'éthyle ou un copolymère de résine siloxane comprenant des unités (CH₃)₃SiO_{1/2} et des unités SiO₂ dans un ratio molaire compris approximativement entre 0,4:1 et 1,2:1, respectivement.

6. Composition selon l'une quelconque des revendications 1-5 dans laquelle le catalyseur (iii) est choisi entre des hydroxydes de métaux alcalins, des silanolates de métaux alcalins, des alcoxydes de métaux alcalins, des hydroxydes d'ammoniums quaternaires, des silanolates d'ammoniums quaternaires, des hydroxydes de phosphoniums quaternaires, des silanolates de phosphoniums quaternaires, du carbonate d'ammonium ou des sels de métaux d'acides organiques.

7. Composition selon l'une quelconque des revendications 2-5 dans laquelle la charge est une silice hydrophobe ayant une aire de surface comprise entre 50 et 300 m²/g en quantité allant jusqu'à 30 parties en poids.

8. Composition selon l'une quelconque des revendications 1-7 dans laquelle le mélange de (I) comprend en plus jusqu'à 20 parties en poids de : (IV) un polyorganosiloxane ayant une viscosité comprise entre 10 et 100 mm²/s à 25°C et étant représenté par la formule générale R⁶ₑ(R⁹O)_{f}SiO_{(4-e-f)/2} dans laquelle R⁶ est un groupe hydrocarboné monovalent ayant 1 à 10 atomes de carbone, R⁹ est un atome d'hydrogène ou un groupe hydrocarboné monovalent ayant 1 à 10 atomes de carbone, e est compris entre 1,9 et 2,2 et f a une valeur suffisante pour donner au moins deux groupes -OR⁹ dans chaque molécule à la fin de la chaîne moléculaire.

9. Composition selon la revendication 8 dans laquelle ledit polyorganosiloxane (IV) est un polydiméthylsiloxane terminé par des hydroxyles ayant une viscosité comprise entre 10 et 100 mm²/s à 25°C.

10. Composition selon l'une quelconque des revendications 1-9 dans laquelle ledit polyisobutylène a un poids moléculaire moyen en nombre compris entre 200 et 400.

11. Composition selon la revendication 1 dans laquelle le groupe terminal saturé est choisi de façon indépendante entre -C(CH₃)₃ ou -CH₂C(CH₃)₂H.

12. Composition selon l'une quelconque des revendications 1-11 dans laquelle la composition comprend en plus au moins un composant choisi entre (V) une huile minérale ou un mélange de (V) une huile minérale et de (VI) une bisamide saturée ou insaturée.

13. Procédé pour maîtriser la mousse dans un système produisant de la mousse comprenant d'ajouter au dit système la composition de n'importe laquelle des revendications 1-12.
